Europäisches Patentamt

(19) European Patent Office

Office européen des brevets

(11) Publication number: **0 112 131**
**A1**

(12) **EUROPEAN PATENT APPLICATION**

(21) Application number: **83307491.7**

(22) Date of filing: **08.12.83**

(51) Int. Cl.³: **B 23 K 11/10**

(30) Priority: **14.12.82 GB 8235139**

(43) Date of publication of application:
**27.06.84 Bulletin 84/26**

(84) Designated Contracting States:
**DE FR GB**

(71) Applicant: **SAVAIR PRODUCTS LIMITED**
**Black Moor Road Ebblake Industrial Estate Verwood**
**Wimborne Dorset BH21 6AX(GB)**

(72) Inventor: **Ward, Allan**
**3 Rainsford Close**
**Stratford-on-Avon Warwickshire(GB)**

(74) Representative: **Alexander, Thomas Bruce et al,**
**Boult, Wade & Tennant 27 Furnival Street**
**London EC4A 1PQ(GB)**

(54) Improvements in resistance welding guns.

㊗ A hydraulic actuating system for a resistance welding gun ·includes a double-acting hydraulic ram connected between arm assemblies of a weld gun, and means to control the ram selectively to cause the arm assemblies of a weld gun, and means to control the ram selectively to cause the arm assemblies to open and close by extension or contraction of the ram. The control means comprises a cylinder (30) having first and second stepped pistons (36, 31) which are actuable by compressed air via inlets (37, 32) to supply hydraulic fluid under pressure via outlets (38, 33) to the ram to cause respectively extension and contraction of the ram.

EP 0 112 131 A1

FIG. 3.

## IMPROVEMENTS IN RESISTANCE WELDING GUNS

This invention relates to resistance welding guns and in particular to a hydraulic actuating system for a resistance welding gun, comprising a hydraulic ram connected, in use, between arm assemblies of a weld gun and operable to open or close the said arm assemblies, and control means for operating means for operating the ram.

Welding guns such as are found on portable manually operated resistance welding stations and robotic welding stations are commonly operated by compressed air cylinders. these cylinders have to be large enough to be able to deliver the required amount of nip pressure for welding which means that the guns tend to be relatively heavy and cumbersome and even more so if a compound cylinder is required to give a pre-weld and wide opening positioning of the electrodes. Amongst other things this hinders the manouverability of the gun and especially in the case of a robotic application, the effective size of the gun and speed of repositioning as weight limitations generally apply.

Air hydraulic pressure intensified systems when used previously on resistance welding guns have generally provided a unidirectional pressure for welding, with a spring return action. Where pre-weld and wide opening positions of the electrodes are required this is generally effected by a separate mechanism. The spring return action and separate wide opening mechanism make even these hydraulic guns larger than necessary and create maintenance and repair problems, and do not give a firm and positive opening of the electrodes such as is needed when they are stuck to the welded metal surface.

Accordingly the present invention provides a hydraulic actuating system of the aforementioned kind characterised in that the ram is double-acting and is operable to open and close the said arm assemblies upon extension or contraction of the ram, and in that the control means is for selectively causing the said arm assemblies to open and close by extension or contraction of the ram, the control means comprising cylinder means having first and second piston means for supplying hydraulic fluid under pressure to the ram to cause respectively extension and contraction of the said ram.

The control means preferably further comprises means for holding the ram in a position intermediate its fully extended and fully contracted positions which intermediate position of the ram defines a pre-weld position of the arm assemblies.

The control means preferably further comprises third piston means for supplying hydraulic fluid under pressure to the ram in combination with either the first or the second piston means whereby the ram is extendable or contractable to its intermediate position using respectively the first or second piston means and further extendable or contractable respectively therefrom to the fully extended or contracted position using the third piston means.

The system preferably comprises stop means for limiting the stroke of the one of the first or second piston means which acts in combination with the third piston means, the stop means being adjustable whereby the intermediate position of the ram can be altered.

The stop means may be adjustable by motorised means should for any reason automatic adjustment be necessary.

The surface areas of the respective working faces of the piston means are preferably chosen such that the pressure exerted on the hydraulic fluid by the piston means is greater than the pressure actuating the piston means, for each piston means by a predetermined ratio.

Each piston means may be in the form of a stepped piston.

The first and third piston means may act in combination to deliver hydraulic fluid from the same cylinder means, in which case the third piston means is preferably in the form of a tubular piston, the tubular piston acting on an annulus of hydraulic fluid.

The control means may comprise a cylinder having a first bore in which the first and third pistons act and a second bore in which the second piston acts, with the bores preferably arranged coaxially.

A further ram may if required be provided in fluid communication with the first bore of the control cylinder, the further ram being positioned, in use, such that its piston acts to positively position the weldgun relative to a robot when in the preweld position. This further ram may be hydraulically locked in position by positioning its fluid communication with the control cylinder through the adjustable stop which makes contact with the first piston where it may form a seal. The hydraulic fluid is preferably water.

Compressed air is preferably used to operate the control means.

The invention operates in conjunction with a specially designed range of welding guns of the straight action, pinch and scissor types with hydraulic actuating systems. Typically in the scissor type weld gun, the hydraulic ram is preferably mounted on the opposite side of the fulcrum to the electrodes whereby extension of the ram causes the arm assemblies to close.

By way of example, one embodiment of the present invention will now be described with reference to the accompanying drawings, in which:

Figure 1 is an elevational view of a weld gun for use with a hydraulic actuating system according to the invention.

- 5 -

Figure 2 is an elevational view of the control cylinder of the hydraulic actuating system.

Figure 3 is a cross-sectional view through the control cylinder of Figure 2.

Figure 4 is a schematic representation of the hydraulic actuating system.

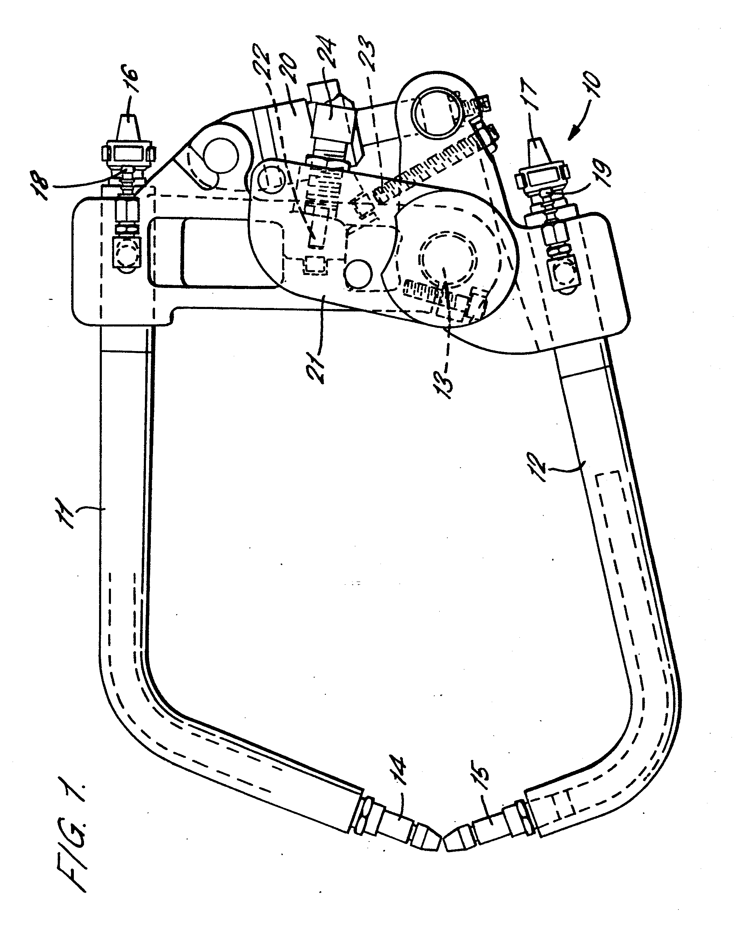

A scissor type weld gun 10 for use with a hydraulic actuating circuit according to the invention is shown in Figure 1. The gun 10 comprises upper and lower arms, 11 and 12 respectively, which are pivotally connected together, like a pair of scissors, about a pin 13. At one end of each arm 11, 12 there is mounted an electrode, 14 and 15 respectively, and at the other end there is mounted a connector, 16 and 17 respectively, so that the electrodes can be connected to a source of electric current. Each arm 11, 12 has a further connector, 18 and 19 respectively, for tapping into a supply of water, which is used to act as a coolant. Between the opposite ends of the arms 11, 12 there is connected a double-acting hydraulic ram 20. The length of ram 20 is adjustable. The gun 10 in this embodiment is part of a robotic welding station, and it is connected to its carrying arm (not shown) by means of an adaptor block 21. The pin 13 is mounted in the adaptor block 21. Each arm 11, 12 has an adjustable limit stop, 22 and 23 respectively, the limit stop 23 for the lower arm 12 being in the conventional form of a threaded bolt and lock nut. The limit stop 22 for the upper arm 11 is provided by the piston of a small hydraulic ram 24.

- 6 -

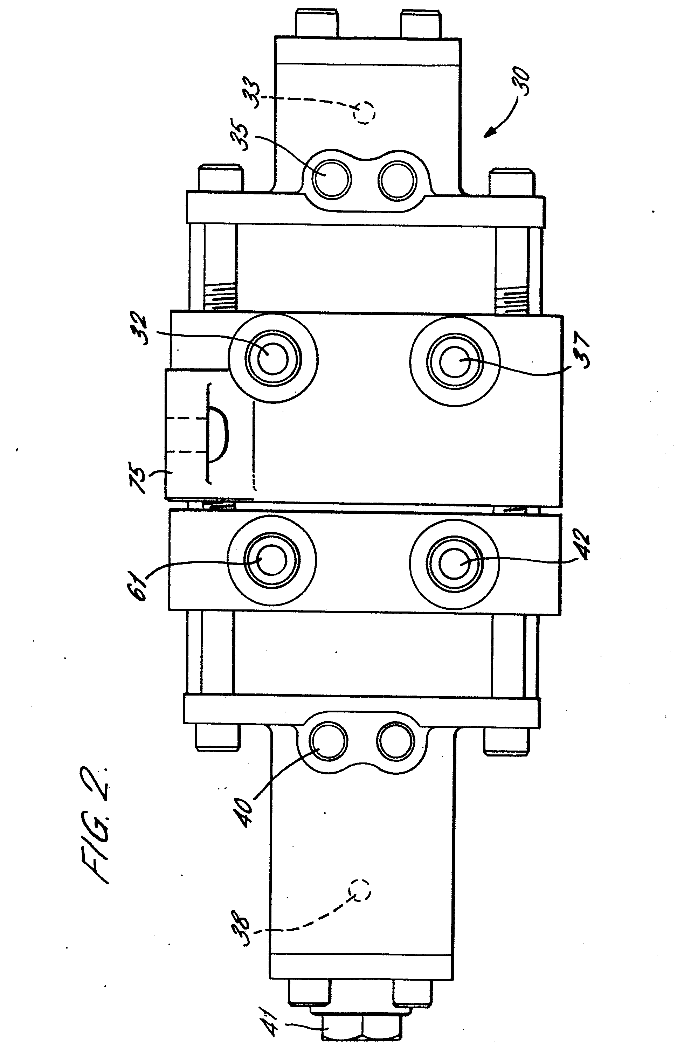

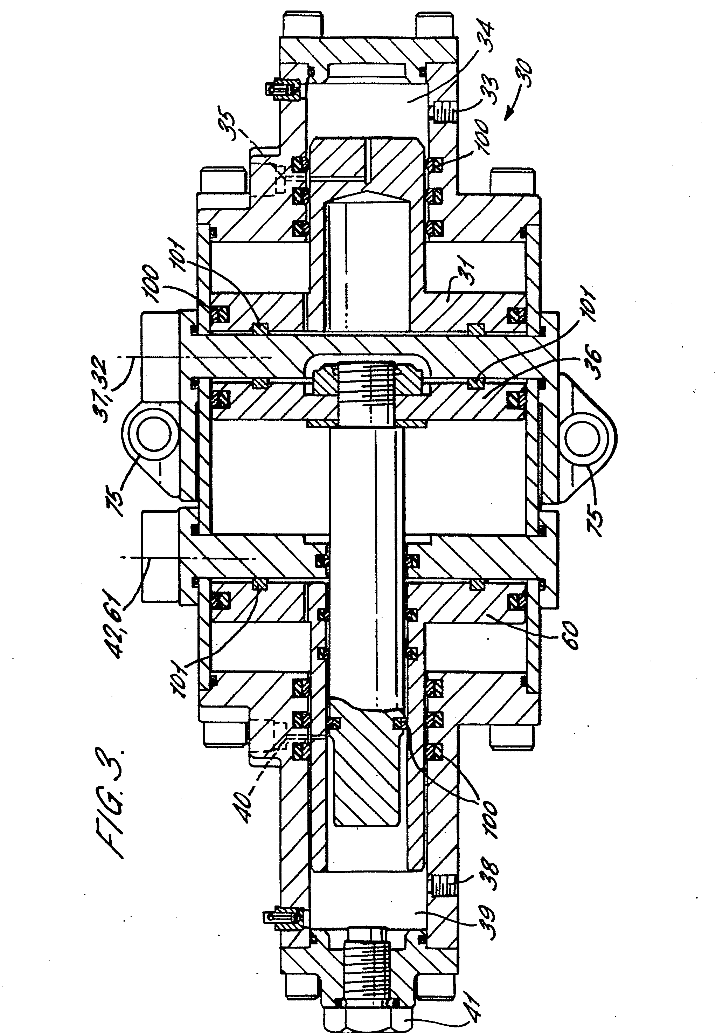

Figures 2 and 3 show a control cylinder 30 for a hydraulic actuating circuit according to the invention. At one end, a stepped piston 31 lies in the bore of the cylinder 30. A conduit 32 in the casing of the cylinder 30 permits compressed air from a control line to enter behind the piston 31. A tapping 33 in the casing of the cylinder 30 permits hydraulic fluid to exit from chamber 34 in front of the piston 31. The areas of the respective working faces of the piston 31 are such as to cause an increase in the hydraulic fluid pressure over the compressed air pressure, in a ratio of about 8 to 1 in this particular embodiment. The level of hydraulic fluid in the chamber 34 is kept topped up because it is connected to a head of water such as a weld station cooling water supply via an inlet 35 in the casing of the cylinder 30.

At the other end of the cylinder 30, another stepped piston 36 lies in a bore in the cylinder. Again, a conduit 37 in the cylinder casing permits compressed air to enter behind the piston 36 and a tapping 38 in the cylinder casing permits hydraulic fluid to exit from chamber 39 in front of the piston 36. In this case, the areas of the respective working faces of the piston 36 are such as to give a hydraulic fluid/air pressure ratio of about 17 to 1 although other ratios may be chosen. Again, the level of hydraulic fluid in the chamber 39 is kept topped up from the reservoir via an inlet 40. The length of stroke of stepped piston 36 is adjustable by means of a conventional limit stop screw 41 at the end of the

cylinder bore. As an alternative, this limit stop may have motorised adjusting means. To retract piston 36, compressed air is introduced in front of the piston 36 via conduit 42 in the cylinder casing.

Also in this other end of the cylinder 30 is a stepped, tubular piston 60. Compressed air can enter behind the tubular piston 60 by way of a conduit 61 and cause hydraulic fluid to exit from the chamber 39 via tapping 38. As will become clearer later, the tubular piston 60 is advanced after the piston 36 has reached its limit stop, which means that the tubular piston 60 acts on a fluid annulus in the chamber 39. The areas of the respective working faces of the tubular piston are chosen so as to give a hydraulic fluid/air pressure ratio of about 17 to 1. The pressure ratio associated with the piston 36 is slightly greater than that of the tubular piston 60.

Each piston in the cylinder is provided with the usual sealing memoers such as "O" rings, as indicated by 100 and annular buffer rings as indicated by 101. The hydraulic fluid used in the system is preferably water, which may come from the same reservoir as the cooling water. The cylinder can be conveniently mounted using lugs 75 remotely from the weld gun itself, there being the usual hydraulic lines connecting the two.

- 8 -

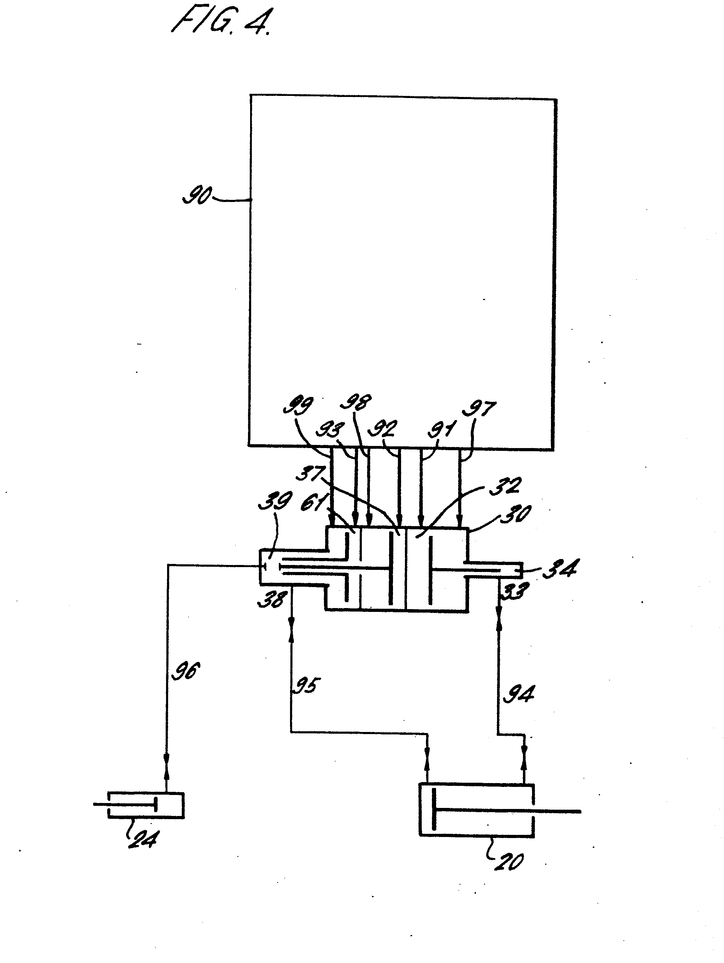

Figure 4 shows schematically the control circuit for a hydraulic actuating system according to the invention. The control cylinder 30 is operated from a conventional type of valve manifold 90 via compressed air lines 91, 92 and 93 which lead to conduits 32, 37 and 61 respectively in the cylinder casing. In this embodiment, the air is conveniently at mains air pressure of, say, between 50 and 80 psi. The control cylinder 30 actuates the weld gun 10 via hydraulic hoses 94 and 95 which lead from tappings 33 and 38 respectively in the cylinder casing to the hydraulic ram 20. Fluid from the chamber 34 in the control cylinder 30 travels via hydraulic hose 94 and enters the hydraulic ram 20 behind its piston, whereas fluid from chamber 39 in the control cylinder 30 travels via hydraulic hose 95 and enters the hydraulic ram 20 in front of its piston. Thus, in this embodiment, hydraulic fluid from chamber 34 actuates the opening action of the weld gun and hydraulic fluid from chamber 39 actuates the closing action of the weld gun.

The small hydraulic ram 24 also communicates with the chamber 39 in the control cylinder, via hydraulic hose 96.

A typical operating cycle of the hydraulic actuating system is as follows:-

While the weld gun 10 is not in its welding routine, for example when it is being moved from one workpiece to the next, arms 11 and 12 are held within their respective positioning stops in the fully apart

position (the piston of the small hydraulic ram 24 being fully retracted). In this case, the maximum seperation between the arms 11 and 12 is about 5 or 6 inches. This opening being determined by ram 20 being fully retracted against an adjustable backstop within the ram. The limit stops 22 and 23 position the welding gun relative to Robot adaptor block 21 about pivot 13. When the weld gun 10 is ready to carry out its welding routine on a workpiece, arms 11 and 12 are brought into their "pre-weld" position. This is done by opening a valve on the valve manifold 90 to allow compressed air, via line 92, to stroke the piston 36 until it reaches its limit stop 41 which in turn causes an associated extension of the ram 20 (i.e.: closure movement of the arms 11 and 12 to the "pre-weld" position). The limit stop 41 can be adjusted to give whatever gap is desired for the "pre-weld" position of the electrodes, for example, about 1 inch. It will be noted here that at the same time, stroking of the piston 36 has caused the piston of small ram 24 to extend fully to again position the weld gun relative to robot adaptor block 21 about pivot 13. During this stroke and at the pre-weld position pressure is maintained on piston 31 and line 94 by supplying compressed air via line 91. The piston ratio being less than for piston 36 the stroking movement of the ram is allowed but movement beyond the pre weld position is firmly checked.

For the subsequent welding operation compressed air ·

is supplied via line 93 to stroke the tubular piston 60 causing a further extension of ram 20 and air pressure is released on line 91 and applied to line returning piston 31 to its full retracted 'topping up' position. This further extension of the ram 20 causes further closure of the arms 11 and 12 to nip the workpiece between the electrodes at which point the weld is made.

After the weld has been made compressed air is applied to lines 91 and 99 and released from 97 and 93 allowing the tubular piston 60 to retract fully and piston 31 to move forward to apply hydraulic pressure on line 94 and drive ram 20 back to the pre weld position as determined by the volume of water displaced back into chamber 39.

The welding movement from the pre-weld positi·. may be repeated several times and when the robot is repositioning between welds the weld gun remains positioned relative to the robot because the arms are contained between stops 23 and 22 (extended piston rod of small ram 24) about robot adaptor block 21 and pivot 13.

When a wide open position of the arms 11 and 12 is required to clear an obstruction such as a fixture part or another part of the workpiece air pressure is applied to line 98 and released from line 92 allowing piston 36 to return fully back and the 'topping up' of chamber 39 to proceed. Ram 20 is driven back to its full retracted position against its internal stop by the pressure still maintained

- 11 -

in line 94. Ram 24 is pushed fully back by its contact with the opening arm 11 and the weld gun is still located relative to the robot by stops 22 and 23 about mounting block 21 and pivot 13. The cycle is now ready to repeat again.

It will be appreciated that the relatively small hydraulic actuating and positioning rams lend themselves to a compact gun design which has the advantage that the gun can be made lighter and more manouverable than conventional guns with large compressed air cylinders. In addition the positive return action and pre-weld intermediate positioning are features not obtainable with similar water/air booster systems.

Whilst a similar working action can be simulated using a conventional and more expensive hydraulic pump power pack, accumulators for weld follow up, and position sensing switches, the use of normal hydraulic fluids presents a fire hazard in a welding environment and even fire resistant fluids (which reduce pump life) contaminate the work area when leakage occurs or parts are dismantled for maintenance. By comparison water leaks are not a problem and frequently occur from deteriation and damage to the cooling water system present at the gun.

CLAIMS:

1) A hydraulic actuating system for a resistance welding gun, comprising a hydraulic ram (20) connected, in use, between arm (11,12) assemblies of a weld gun (10) and operable to open or close the said arm assemblies, and control means for operating the ram, characterised in that the ram is double-acting and is operable to open and close the said arm assemblies upon extension or contraction of the ram, and in that the control means is for selectively causing the said arm assemblies to open and close by extension or contraction of the ram, the control means comprising cylinder means (30) having first (36) and second (31) piston means for supplying hydraulic fluid under pressure to the ram to cause respectively extension and contraction of the said ram.

2) A system as claimed in Claim 1 wherein the control means further comprises means for holding the ram in a position intermediate its fully extended and fully contracted positions, which intermediate position of the ram defines a pre-weld position of the arm assemblies.

3) A system as claimed in Claim 2 wherein the control means further comprises third piston means for supplying hydraulic fluid under pressure to the ram in combination with either the first or the second piston means whereby the ram is extendable or contractable to its intermediate position using respectively the first or second piston means and further extendable or contractable respectively therefrom to the fully extended or contracted position using the third piston means.

4) A system as claimed in Claim 3 comprising stop means for limiting the stroke of the one of the first or second piston means which acts in combination with the third piston means, the stop means being adjustable whereby the intermediate position of the ram can be altered.

5) A system as claimed in Claim 4 wherein said stop means is adjustable by motorised means.

6) A system as claimed in any preceding claim wherein the surface areas of the respective working faces of the piston means are chosen such that the pressure exerted on the hydraulic fluid by the piston means is greater than the pressure actuating the piston means, for each piston means by a predetermined ratio.

7) A system as claimed in any preceding claim wherein each piston means is in the form of a stepped piston.

8) A system as claimed in Claim 7, as dependant on Claim 3, wherein the first and third piston means act in combination to deliver hydraulic fluid from the same cylinder means.

9) A system as claimed in Claim 8 wherein the third piston means is in the form of a tubular piston, the tubular piston acting on an annulus of hydraulic fluid.

- 14 -

10) A system as claimed in Claim 9 wherein the control means comprises a cylinder having a first bore in which the first and third pistons act and a second bore in which the second piston acts.

11) A system as claimed in Claim 10 wherein said first and second bores of the control means are arranged coaxially.

12) A system as claimed in Claim 10 or 11 wherein a further ram is provided in fluid communication with the first bore of the control cylinder and sealed off when the first piston extends, the further ram being positioned, in use, such that its piston acts as a positioning stop to control the position of the weld gun relative to the robot when in the open and pre-weld positions, but allowing the gun to position itself to the component during welding.

13) A system as claimed in any preceding claim wherein the hydraulic fluid is water.

14) A system as claimed in any preceding claim wherein compressed air is used to operate the control means.

15) A resistance welding gun for a robotic welding station having a hydraulic actuating system as claimed in any preceding claim.

16) A gun as claimed in Claim 16 wherein the gun is a scissor-type gun and the hydraulic ram is mounted on the opposite side of the fulcrum to the electrodes whereby extension of the ram causes the arm assemblies of the gun to close.

FIG. 1.

11

18

16

22
20
21
24
23

14

13

15

12

17

19

10

1/4

0112131

FIG. 2.

61  75  32

38
41  40  35  33

42  37  30

2/4

0112131

FIG. 3.

42,61  75  37,32  100

101  101  35

40

3/4

41  39  38  100  60  31  100  33  34  30

75  36  101

0112131

FIG. 4.

| DOCUMENTS CONSIDERED TO BE RELEVANT | | | EP 83307491.7 |
|---|---|---|---|
| Category | Citation of document with indication, where appropriate, of relevant passages | Relevant to claim | CLASSIFICATION OF THE APPLICATION (Int. Cl. ³) |
| A | DE - A - 2 328 424 (KELLER & KNAPPICH)<br><br>* Fig. 1-3; claim *<br><br>---- | | B 23 K 11/10 |
| | | | **TECHNICAL FIELDS SEARCHED (Int. Cl. ³)**<br><br>B 23 K 11/00 |

The present search report has been drawn up for all claims

| Place of search | Date of completion of the search | Examiner |
|---|---|---|
| VIENNA | 29-02-1984 | BENCZE |